# EUROPEAN PATENT APPLICATION

(11) **EP 4 406 812 A1**
(43) Date of publication of application: **31.07.2024**
(21) Application number: 22953829.3
(22) Date of filing: 08.11.2022
(51) Int. Cl.: B61L 25/02, B61L 23/00

(54) **TRAIN POSITIONING METHOD BASED ON DYNAMIC MAP**

(30) Priority: 04.08.2022 CN 202210934076
(71) Applicant: Casco Signal Ltd., Shanghai 200072 (CN)
(72) Inventor: GUO, Ziming, Shanghai 200072 (CN); LIU, Ben, Shanghai 200072 (CN); FANG, Xing, Shanghai 200072 (CN); WANG, Xuchao, Shanghai 200072 (CN); HU, Jingen, Shanghai 200072 (CN); CHANG, Ming, Shanghai 200072 (CN); LV, Xinjun, Shanghai 200072 (CN)
(74) Representative: Yang, Shu
(86) International application number: PCT/CN2022/130611
(87) International publication number: WO 2024/027038

(57) **Abstract**

Provided in the present invention is a train positioning method based on a dynamic map. The method includes: step S1, performing train positioning initialization based on a positioning source, and obtaining key point information for creating the dynamic map; step S2, generating key point coordinates according to the key point information, and creating the dynamic map; step S3, updating a train position on the dynamic map according to train displacement and beacon information; step S4, updating the dynamic map, and updating the train position based on the updated dynamic map; and step S5, converting an updated train position in the updated dynamic map into a standard track map, so as to achieve train positioning. In the present invention, a plurality of initialized positioning sources are used to obtain initialization positioning information of train key points, creation of a dynamic map is completed, and the present invention has an advantage of high availability, so that a problem of low train positioning efficiency is resolved, compatibility and applicability with a traditional method are ensured, subsequent function extension is facilitated, and an advantage of stable positioning performance is provided.

## Description

### TECHNICAL FIELD

The present invention relates to the field of rail transit, in particular to a train positioning method based on a dynamic map.

### BACKGROUND

In order to ensure the safety of train operation, the train positioning system needs to know the position and operation state of the train in real time and accurately, so as to provide necessary information support for position-based safety related applications such as automatic train operation and safety warning. The continuous development of rail transit, on the basis of efficient and safe train operation control, has put forward higher requirements for train positioning performance.

At present, a speed and distance measurement method is widely used in the common train positioning system based on vehicle on-board speed sensors to obtain the speed and position measurement of the train, supplemented by ground beacons to correct the train position. Since a train only travels on a fixed track, an electronic track map is an indispensable data basis. The train positioning system maps a train position on the map, which is actually expressed as a one-dimensional distance measurement along a track direction taking a track fixed position as a starting point.

In a traditional train positioning method based on a static electronic track map, the influence of characteristic points, such as track section boundaries and poles, on the train position and operation direction in the map needs to be considered during the positioning process. For example, when a certain end of a train crosses a track section boundary or is repositioned by a beacon, a direction conversion needs to be performed by considering whether there are poles within a train body range for many times in a calculation process, and a relatively complex track section search and coordinate conversion are performed to ensure the unification of position processing. This processing manner causes a waste of computing resources, and is not conducive to expansion of a positioning function. Therefore, there is a need for an efficient and reliable train positioning method, which improves the train positioning performance.

### SUMMARY

The object of the present invention is to provide a train positioning method based on a dynamic map, which has advantages such as high efficiency, reliability and high compatibility.

In order to achieve the above object, provided in the present invention is a train positioning method based on a dynamic map. The method includes: step S1, performing train positioning initialization based on a positioning source, and obtaining key point information for creating the dynamic map; step S2, generating key point coordinates according to the key point information, and creating the dynamic map; step S3, updating a train position on the dynamic map according to train displacement and beacon information; step S4, updating the dynamic map, and updating the train position based on an updated dynamic map; and step S5, converting the updated train position in the updated dynamic map into a standard track map, so as to achieve train positioning.

Preferably, the positioning source in step S 1 includes: VOBCs provided at two ends of a train, the VOBCs at the two ends of the train being in a master-backup relationship; and beacon antennas provided at the two ends of the train and used for receiving the beacon information for train positioning.

Preferably, the performing train positioning initialization based on a positioning source in step S1 can be obtained by the following manners: manner 1, performing positioning by means of the VOBC at a backup end of the train, and performing positioning initialization by means of the train position synchronized by the VOBC at the backup end; manner 2, performing positioning by means of a dormant wake-up beacon, and when the train stops in a dormant wake-up region and the beacon antennas read dormant wake-up beacon information sent by the matched dormant wake-up beacon, performing positioning initialization on a position of the beacon antenna at an activation end by means of position information of the dormant wake-up beacon in the standard track map; and manner 3, performing positioning by means of track beacons read by the train in a movement process, and after the beacon antennas on the train read track beacon information sent by two continuous track beacons, performing positioning initialization on the position of the beacon antenna at the activation end by means of two track beacon positions and a correlation therebetween; according to an actual state of the train, performing positioning on the train by selecting any of the train positioning manners in manners 1 to 3, and obtaining the key point information for creating the dynamic map.

Preferably, the key point information of the dynamic map includes a Block ID, coordinates and direction where a train tail or the beacon antenna is located.

Preferably, determining a coordinate origin of the dynamic map includes the following cases: case 1, if the key point information is the Block ID, coordinates and direction where the train tail is located, setting the coordinate origin of the dynamic map according to the block direction where the train tail is located; and case 2, if the key point information is the Block ID, coordinates and direction where the beacon antenna is located, calculating the coordinates of the train tail according to the coordinates of the beacon antenna and a distance from the train tail to the beacon antenna in the train parameters, and then setting the coordinate origin of the dynamic map according to the Block direction where the train tail is located.

Preferably, the generating key point coordinates according to the key point information, and creating the dynamic map in step S2 specifically includes the following steps: step S201, acquiring key point information according to step S 1, and determining the coordinate origin of the dynamic map; step S202, based on a link relationship of various Blocks in the standard track map, respectively performing searching in a positive direction and negative direction of the dynamic map based on the coordinate origin of the dynamic map determined in step S201, and storing searched relevant information of each Block to obtain a complete Block list for forming the dynamic map; and step S203, converting the coordinates of the train tail to the dynamic map, and calculating coordinates of a train head and the beacon antennas on the dynamic map according to a train length and the distance from the train tail to the beacon antenna.

Preferably, the positive direction of the dynamic map is a direction from the train tail to the train head; when the direction of the Block where the train tail is located is Up, the coordinate origin of the dynamic map is a starting point of the Block where the train tail is located; when the direction of the Block where the train tail is located is Down, the coordinate origin of the dynamic map is an end point of the Block where the train tail is located.

Preferably, the relevant information of each Block in step S202 comprises a Block ID, direction and length in each track section; and according to the length of each Block, a distance from one end of the Block closer to the origin of the dynamic map to the origin of the dynamic map is calculated, wherein a distance from an endpoint of the Block to the origin of the dynamic map in the positive direction of the dynamic map is a positive value, and a distance from the endpoint of the Block to the origin of the dynamic map in the negative direction of the dynamic map is a negative value.

Preferably, if an uncontrolled switch, track boundary, or search capacity is searched in a searching process in step S202, then the searching is stopped.

Preferably, the converting the coordinates of the train tail to the dynamic map in step S203 specifically comprises: determining whether the direction of the train tail obtained in step S 1 is consistent with the direction of the Block where the train tail is located; if the directions are consistent, the coordinates of the train tail on the dynamic map are the same as the coordinates of the train tail obtained in step S 1; if the directions are inconsistent, the coordinates of the train tail on the dynamic map are determined by subtracting the coordinates of the train tail from the length of the Block where the train tail is located.

Preferably, the updating a train position on the dynamic map according to train displacement or beacon information in step S3 specifically comprises: if the beacon antennas on the train do not read repositioning icon information sent by a repositioning icon, calculating current positions of a train head, a train tail and the beacon antennas according to the train displacement at a current moment and a train position at a previous moment; and; and if the beacon antennas on the train read the repositioning icon information sent by the repositioning icon, converting a position of the repositioning icon in the standard track map to the dynamic map, and updating the key point information of the beacon antennas on the train according to the coordinates of the repositioning icon on the dynamic map.

Preferably, step S4 is performed when any of update conditions for the dynamic map is satisfied, and the update conditions specifically comprise the following update conditions: condition 1, if there is a change in an activation end of the current train, converting the position of the train tail on the current dynamic map to the standard track map, repeating step S2 to determine a coordinate origin of a new dynamic map, performing searching in a positive direction and negative direction by using the coordinate origin of the new dynamic map, acquiring a new Block list, and creating the new dynamic map; condition 2, if there is a change in the current switch state, converting the position of the train tail on the current dynamic map to the standard track map, repeating step S2 to determine a coordinate origin of a new dynamic map, performing searching in a positive and negative direction by using the coordinate origin of the new dynamic map, acquiring a new Block list, and creating the new dynamic map; and condition 3, if the number of Blocks through which the movement of the train tail passes after the last dynamic map update exceeds the preset number of Blocks, taking an endpoint of a Block where the train tail is located that is close to an origin of an old dynamic map as an origin of a new dynamic map, updating distance information from an end of each Block in the original list of Blocks close to the origin of the new dynamic map to the origin of the new dynamic map according to a distance between the new origin and the old origin, and deleting a Block whose searching capacity exceeds a searching capacity in a negative direction of the dynamic map.

Preferably, the searching capacity in the positive direction of the origin of the dynamic map is larger than the searching capacity in the negative direction, and the searching capacity in the negative direction is not larger than 10.

Preferably, the converting the train position on the dynamic map to the standard track map in step S5 includes the following steps: step S501, determining whether the coordinates of the train position on the dynamic map are in the positive direction of the origin of the dynamic map; if the coordinates are in the positive direction, performing searching from the origin of the dynamic map to the positive direction; if the coordinates are not in the positive direction, performing searching from the origin of the dynamic image to the negative direction; step S502, comparing the train position with the coordinates of each Block in the Block list in the dynamic map, and determining a Block ID where the train position is located; and step S503, calculating the coordinates of the train position in the Block.

Preferably, the calculating the coordinates of the train position in the Block in step S503 specifically includes: if the direction of the Block is Up, the train direction is the same as the direction of the Block, and the coordinates of the train position on the Block are determined by subtracting the coordinates of the Block from the coordinates of the train position; and if the direction of the Block is Down, the train direction is the same as the direction of the Block, and the coordinates of the train position on the Block are determined by subtracting the coordinates of the train position from the coordinates of the Block.

Preferably, the train position is converted to the standard track map by performing steps S501-S503, the converted train position is represented as (Block ID, coordinates of the train position on the Block, and train direction) on the standard track map.

In conclusion, compared with the prior art, the present invention provides a train positioning method based on a dynamic map, which has the following beneficial effects.
1. In the present invention, a plurality of initialized positioning sources are used to obtain initialization positioning information of train key points, creation of a dynamic map is completed, and the present invention has an advantage of high availability.
2. The dynamic map created in the present invention comprises a link relationship among a plurality of Blocks, and all train positioning-related processing is performed in the dynamic map; compared with a traditional train positioning method based on a static topological map, the present invention effectively avoids the Block searching and pole processing required for frequent coordinate conversion, solves the problem of low train positioning efficiency, and further improves the ATP performance.
3. The present invention achieves coordinate conversion between a standard track map and a dynamic map, ensures compatibility and applicability with a traditional method, and facilitates subsequent function extension.
4. In the present invention, dynamic map updating is only triggered when the train changes ends, the switch states change, and the train movement exceeds a certain number of Blocks, and two problems are taken into account, i.e., the dynamic map is frequently updated when the train operates and the origin of the dynamic map is not updated after the train operates for a long distance, so that static and dynamic coordinate conversion consumes a lot of time, thereby reducing the impact of dynamic map updating on positioning performance as far as possible.

### BRIEF DESCRIPTION OF THE DRAWINGS

FIG. 1 is an overall flowchart of a train positioning method based on a dynamic map according to an embodiment of the present invention;
FIG. 2 is a schematic diagram of determining a coordinate origin of a dynamic map according to an embodiment of the present invention;
FIG. 3 is a schematic diagram of creating a Block list in a dynamic map according to an embodiment of the present invention; and
FIG. 4 is a schematic diagram illustrating coordinates conversion from a dynamic map to a standard track map according to an embodiment of the present invention.

### DETAILED DESCRIPTION

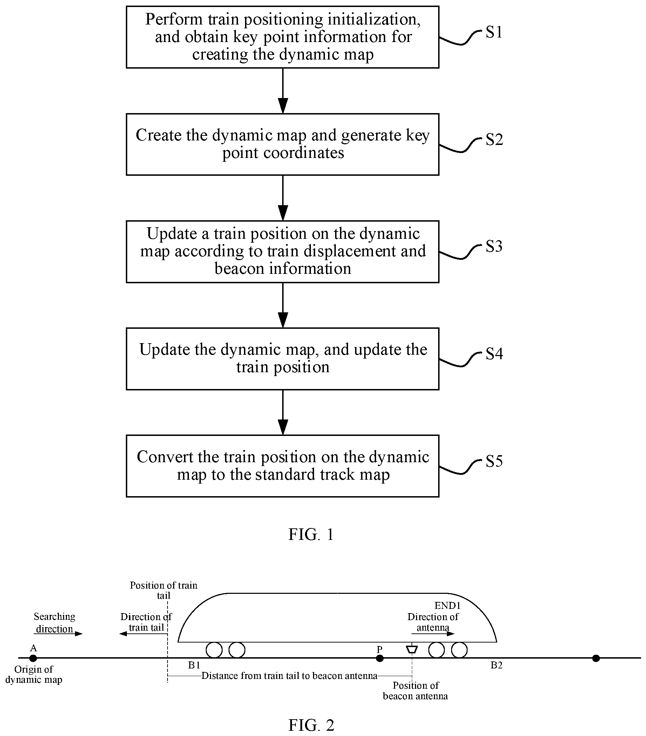

The technical solutions, the structural features, the objectives and the effects achieved in the embodiments of the present invention will be described in detail below with reference to FIG. 1 to FIG. 4 in the embodiments of the present invention.

It should be noted that, in the present invention, relational terms such as first and second are only used to distinguish one entity or operation from another entity or operation, and do not necessarily require or imply any actual relationship or sequence between these entities or operations. Furthermore, the terms "include", "comprise", or any other variation thereof are intended to cover a non-exclusive inclusion, so that a process, a method, an article, or a device that includes a series of elements not only includes elements that are explicitly listed, but also includes other elements that are not explicitly listed, or further includes inherent elements of the process, the method, the article, or the device.

The present invention provides a train positioning method based on a dynamic map. As shown in FIG. 1, the method includes: step S 1, performing train positioning initialization based on a positioning source, and obtaining key point information for creating the dynamic map; step S2, generating key point coordinates according to the key point information, and creating the dynamic map; step S3, updating a train position on the dynamic map according to train displacement and beacon information; step S4, updating the dynamic map, and updating the train position based on an updated dynamic map; and step S5, converting the updated train position in the updated dynamic map into a standard track map, so as to achieve train positioning.

The beacon is used for train positioning. When a train passes the beacon, the beacon antennas on the train receive a group of beacon information sent by the beacon, and transmit the group of beacon information to a Carrier Controller (CC, Carborne Controller) to identify the beacon, and query a track database by means of the received beacon information, so as to determine a current position of the train. the beacons include a dormant wake-up beacon and a track beacon, wherein the dormant wake-up beacon is used for waking up a train in a dormant wake-up region and performing train positioning; and the track beacon is used for sending track beacon information, and achieving train positioning by means of the track beacon information.

The positioning source in step S 1 includes: Vehicle On-Board Controllers (VOBCs) provided at two ends of a train, the VOBCs at the two ends of the train being in a master-backup relationship, i.e., if the VOBC acting as a master end on the train fails, train positioning can be performed by the VOBC acting as a backup end on the train; and beacon antennas provided at the two ends of the train and used for receiving the beacon information for train positioning.

Further, the performing train positioning initialization based on a positioning source in step S1 can be obtained by the following manners: manner 1, performing positioning by means of the VOBC at a backup end of the train; manner 2, performing positioning by means of a dormant wake-up beacon; and manner 3, performing positioning by means of track beacons read by the train in a movement process. According to the actual state of the train, a matched train positioning method is selected to position the train, and key point information for creating a dynamic map is obtained.

The key point information of the dynamic map comprises a Block ID (track section ID), coordinates and direction where a train tail or the beacon antenna is located.

Specifically, performing positioning by means of the VOBC at a backup end in manner 1 includes: when the VOBC at the master end of the train fails, but the VOBC at the backup end works normally, the positioning initialization is performed by means of the train position synchronized from the VOBC at the backup end, so as to obtain the Block ID, coordinates and direction of the train tail. Performing positioning by means of a dormant wake-up beacon in manner 2 includes: when the train stops in a dormant wake-up region and the beacon antennas read dormant wake-up beacon information sent by the matched dormant wake-up beacon, performing positioning initialization on a position of the beacon antenna at an activation end by means of position information of the dormant wake-up beacon in the standard track map, so as to obtain the Block ID, coordinates and direction of the beacon antenna at the activation end. Performing positioning by means of track beacons read by the train in a movement process in manner 3 includes: when a train operates, after the beacon antenna at the active end of the train reads the track beacon information sent by two consecutive track beacons, positioning initialization is performed on the beacon antenna at the activation end by means of two track beacon positions and a correlation therebetween, so as to obtain the Block ID, coordinates, and direction where the beacon antenna at the activation end is located.

The generating key point coordinates according to the key point information, and creating the dynamic map in step S2 specifically includes the following steps:
step S201, acquiring key point information according to step S 1, and determining the coordinate origin of the dynamic map
step S202, based on a link relationship of various Blocks (track sections) in the standard track map, respectively performing searching in a positive direction and negative direction of the dynamic map (a specific search capacity being configured according to needs) based on the coordinate origin of the dynamic map determined in step S201, and storing searched relevant information of each Block to obtain a complete Block list for forming the dynamic map; and
step S203, converting the coordinates of the train tail to the dynamic map, and calculating coordinates of a train head and the beacon antennas on the dynamic map according to a train length and the distance from the train tail to the beacon antenna.

The dynamic map formed by performing steps S201 - S203 contains relevant information of multiple Blocks obtained by searching from the origin of the dynamic map in the positive and negative directions.

Further, the acquiring the key point information according to step S 1 and determining the coordinate origin of the dynamic map in step S201 specifically includes two cases: case 1, if the key point information is the Block ID, coordinates and direction where the train tail is located, setting the coordinate origin of the dynamic map according to the Block direction where the train tail is located; and case 2: if the key point information is the Block ID, coordinates and direction where the beacon antenna is located, calculating the coordinates of the train tail according to the coordinates of the beacon antenna and a distance from the train tail to the beacon antenna in the train parameters, and then setting the coordinate origin of the dynamic map according to the Block direction where the train tail is located.

The positive direction of the dynamic map is a direction from the train tail to the train head; when the direction of the Block where the train tail is located is Up (up direction), the coordinate origin of the dynamic map is a starting point of the Block where the train tail is located, i.e., an endpoint of the Block adjacent to the train tail is the coordinate origin of the dynamic map; when the direction of the Block where the train tail is located is Down (down direction), the coordinate origin of the dynamic map is an end point of the Block where the train tail is located, i.e., an endpoint of the Block away from the train tail is the coordinate origin of the dynamic map.

The relevant information of each Block in step S202 comprises a Block ID, direction and length in each track section. According to the length of each Block, a distance from one end of the Block closer to the origin of the dynamic map to the origin of the dynamic map is calculated, wherein a distance from an endpoint of the Block to the origin of the dynamic map in the positive direction of the dynamic map is a positive value, and a distance from the endpoint of the Block to the origin of the dynamic map in the negative direction of the dynamic map is a negative value. If an uncontrolled switch, track boundary, or search capacity is searched in a searching process, then the searching is stopped.

As the track section Block is a one-dimensional coordinate, the converting the coordinates of the train tail to the dynamic map in step S203 specifically includes: determining whether the direction of the train tail obtained in step S1 is consistent with the direction of the Block where the train tail is located; if the directions are consistent, the coordinates of the train tail on the dynamic map are the same as the coordinates of the train tail obtained in step S1; if the directions are inconsistent, the coordinates of the train tail on the dynamic map are determined by subtracting the coordinates of the train tail from the length of the Block where the train tail is located.

The updating a train position on the dynamic map according to train displacement or beacon information in step S3 specifically includes: if the beacon antennas on the train do not read repositioning icon information sent by a repositioning icon, calculating current positions of a train head, a train tail and the beacon antennas according to the train displacement at a current moment and a train position at a previous moment; and if the beacon antennas on the train read the repositioning icon information sent by the repositioning icon, converting a position of the repositioning icon in the standard track map to the dynamic map, and updating the key point information of the beacon antennas on the train according to the coordinates of the repositioning icon on the dynamic map, i.e., assigning a position of the repositioning icon in the dynamic map to the beacon antennas on the train, and updating the key point information of the train tail by means of a position relationship between the beacon antennas and the train tail.

The dynamic map needs to be updated in real-time with the operation of the train. Step S4 is performed when any of update conditions for the dynamic map is satisfied, and the update conditions specifically comprise the following update conditions:
condition 1: if there is a change in an activation end of the current train, converting the position of the train tail on the current dynamic map to the standard track map, repeating step S2 to determine a coordinate origin of a new dynamic map, performing searching in a positive direction and negative direction by using the coordinate origin of the new dynamic map, acquiring a new Block list, and creating the new dynamic map;
condition 2: if there is a change in the current switch state, converting the position of the train tail on the current dynamic map to the standard track map, repeating step S2 to determine a coordinate origin of a new dynamic map, performing searching in a positive and negative direction by using the coordinate origin of the new dynamic map, acquiring a new Block list, and creating the new dynamic map, wherein, the change of the switch state comprises addition and deletion of the switch node and changing of the switch state; and
condition 3, if the number of Blocks through which the movement of the train tail passes after the last dynamic map update exceeds the preset number of Blocks, taking an endpoint of a Block where the train tail is located that is close to an origin of an old dynamic map as an origin of a new dynamic map, updating distance information from an end of each Block in the original list of Blocks close to the origin of the new dynamic map to the origin of the new dynamic map according to a distance between the new origin and the old origin, and deleting a Block node whose searching capacity exceeds a searching capacity in a negative direction of the dynamic map, wherein the searching capacity in the positive direction of the origin of the dynamic map is greater than the searching capacity in the opposite direction, and the searching capacity in the opposite direction is not greater than 10.

After the dynamic map is updated, converting the current position of a train tail to a new dynamic map, and calculating coordinates of a train head and the beacon antennas on the new dynamic map in combination with a train length and the distance from the train tail to the beacon antenna.

The converting the train position on the dynamic map to the standard track map in step S5 comprises the following steps: step S501, determining whether the coordinates of the train position on the dynamic map are in the positive direction of the origin of the dynamic map; if the coordinates are in the positive direction, performing searching from the origin of the dynamic map to the positive direction; if the coordinates are not in the positive direction, performing searching from the origin of the dynamic image to the negative direction; step S502, comparing the train position with the coordinates of each Block in the Block list in the dynamic map, and determining a Block ID where the train position is located; and step S503, calculating the coordinates of the train position in the Block. Specifically, if the direction of the Block is Up, the train direction is the same as the direction of the Block and is also Up, i.e., the train operates in the direction of increasing coordinates in the standard track map, and the coordinates of the train position on the Block are determined by subtracting the coordinates of the Block from the coordinates of the train position, i.e., the train position coordinates on the standard track map is obtained; if the direction of the Block is Down, the train direction is the same as the direction of the Block and is also Down, i.e., the train operates in the direction of decreasing coordinates in the standard track map, and the coordinates of the train position on the Block are determined by subtracting the coordinates of the train position from the coordinates of the Block, i.e., the train position coordinates on the standard track map is obtained.

The train position is converted to the standard track map by performing steps S501-S503, the converted train position is represented as (Block ID, coordinates of the train position on the Block, and train direction) on the standard track map, and the converted train position can provide information support for other application services based on a train position.

FIG. 2 is a schematic diagram of determining a coordinate origin of a dynamic map according to an embodiment. In this embodiment, a train track includes two Blocks (a track section B1 and a track section B2), the directions of two track sections B 1 and B2 are Up, and the searching direction is opposite to the direction Down of the train tail, but the directions of the two track sections B 1 and B2 are the same. Therefore, step S201 is performed according to the position of the train on the track in FIG. 2, determining a coordinate origin of the dynamic map includes the following two cases:
case 1, if the key point information is the train tail, in this embodiment, the train tail is located on a track section B 1, and the direction of the track section B 1 is Up, an endpoint A of the track section B 1 in the direction of the train tail is a coordinate origin of the dynamic map, and the endpoint A is a starting point of the track section B 1 where the train tail is located; and
case 2, if the key point information is the beacon antenna, in this embodiment, the beacon antenna is located on the track section B2, calculating the coordinates of the train tail according to the coordinates of the beacon antenna and a distance from the train tail to the beacon antenna in the train parameters. After calculation, the coordinate of the train tail is located in the track section B 1, the endpoint A of the track section B 1 in the direction of the train tail is the coordinate origin of the dynamic map, and the endpoint A is the starting point of the track section B 1 where the train tail is located.

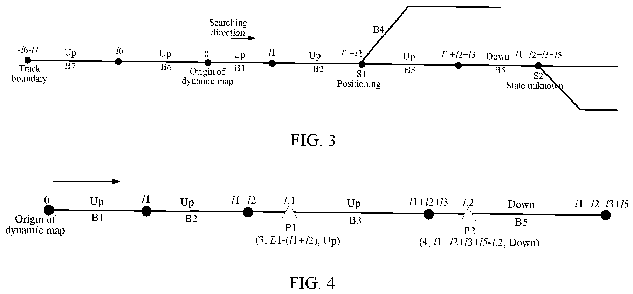

FIG. 3 is a schematic diagram of creating a Block list in a dynamic map. In this embodiment, searching is performed on Blocks on a train track as shown in FIG. 3, step S202 is performed, a searching direction is set as a positive direction of a dynamic map. Based on a link relationship between track sections in a standard track map, performing searching in a positive direction and negative direction from a coordinate origin of a dynamic map in a positive direction and negative direction, and constructing a Block list, as shown in FIG. 3, includes the following steps:
step S221, searching from the origin of the dynamic map in a positive direction, sequentially searching for a track section B1 and a track section B2, both directions being Up, and at this time, there being a switch variable S 1 in a positioning state, and thus continuing to search for a track section B3 and a track section B5, the directions being Up and Down, respectively, and the state of a switch variable S2 after the track section B5 being unknown and being a non-controlled switch, and then ending the positive searching;
step S222, searching from the origin of the dynamic map in a negative direction, sequentially searching for a track section B6 and a track section B7, both directions being Up, subsequently searching for a track boundary, and ending the reverse searching;
storing a Block ID and direction of each searched track section, and according to the length of each Block, calculating a distance from one end of the Block closer to the origin of the dynamic map to the origin of the dynamic map, wherein a distance from an endpoint of the Block to the origin of the dynamic map in the positive direction of the dynamic map is a positive value, and a distance from the endpoint of the Block to the origin of the dynamic map in the negative direction of the dynamic map is a negative value, and the resulting complete Block list is: [(7, Up, -l6), (6, Up, 0), (1, Up, 0), (2, Up, 11), (3, Up, l1+l2), (5, Down, l1+l2+l3)].

FIG. 4 is a schematic diagram illustrating coordinates conversion from a dynamic map to a standard track map according to an embodiment. At the train position shown in FIG. 4, if a train head is located at P1, performing step S5. The converting the train position on the dynamic map to the standard track map includes the following steps:
step S501, determining whether the coordinates of the train position on the dynamic map are in the positive direction of the origin of the dynamic map; in this embodiment, as shown in FIG. 4, the train head is located at P1, the position coordinates of the train head in the dynamic map is L1, and L1 is greater than 0, i.e., the train head is located in the positive direction of the origin of the dynamic map, and then searching is performed from the origin of the dynamic map original point to the positive direction;
step S502, comparing the train position with the coordinates of each Block in the Block list in the dynamic map, and determining a Block ID where the train position is located; in this embodiment, the position coordinate of the train head is L1, as l1+l2<L1<l1+l2+l3, it can be determined that the Block ID where the train head P1 is located is 3; and
step S503, calculating the coordinates of the train position in the Block. As the direction of the train head is the same as the direction of the Block and is also Up, i.e., the train operates in the direction of increasing coordinates in the standard track map, the coordinates of the train head P1 on the track section B3 are L1-(l1+l2); and the position of the train head P1 obtained by performing steps S501-S503 is represented as (3, L1-(l1+l2), Up) on the standard track map.

As shown in FIG. 4, in another embodiment, if a train head is located at P2, performing step S5. The converting the train position on the dynamic map to the standard track map in step S5 includes the following steps:
step S501, determining whether the coordinates of the train position on the dynamic map are in the positive direction of the origin of the dynamic map; in this embodiment, as shown in FIG. 4, the train head is located at P2, the position coordinates of the train head in the dynamic map is L2, L2 is greater than 0, i.e., the train head is located in the positive direction of the origin of the dynamic map, and then searching is performed from the origin of the dynamic image to the positive direction;
step S502, comparing the train position with the coordinates of each Block in the Block list in the dynamic map, and determining a Block ID where the train position is located; in this embodiment, the position coordinate of the train head is L2, as l1+l2+l3<L2<l1+l2+l3+l5, it can be determined that the Block ID where the train head P2 is located is 5; and
step S503, calculating the coordinates of the train position in the Block. As the direction of the train head is the same as the direction of the Block and is also Down, i.e., the train operates in the direction of decreasing coordinates in the standard track map, the coordinates of the train head P2 on the track section B5 are l1+l2+l3+l5-L2; and the position of the train head P2 obtained by performing steps S501-S503 is represented as (5 ^{,} l1+l2+l3+l5-L2, Down) on the standard track map.

In conclusion, compared with the prior art, the train positioning method based on a dynamic map provided by the present invention has the advantages of high availability, high compatibility and high applicability, and solves the problems of low train positioning efficiency and longtime consumption for static and dynamic coordinate conversion.

While the present invention has been described in detail with reference to the preferred embodiments, it should be understood that the above description should not be taken as limiting the invention. Various modifications and alternatives to the present invention will become apparent to those skilled in the art upon reading the foregoing disclosure. Accordingly, the protection scope of the present invention shall be limited by the appended claims.

## Claims

1. A train positioning method based on a dynamic map, comprising:
step S1, performing train positioning initialization based on a positioning source, and obtaining key point information for creating the dynamic map;
step S2, generating key point coordinates according to the key point information, and creating the dynamic map;
step S3, updating a train position on the dynamic map according to train displacement and beacon information;
step S4, updating the dynamic map, and updating the train position based on an updated dynamic map; and
step S5, converting the updated train position in the updated dynamic map into a standard track map, so as to achieve train positioning.

2. The train positioning method based on a dynamic map according to claim 1, wherein the positioning source in step S1 comprises: VOBCs provided at two ends of a train, the VOBCs at the two ends of the train being in a master-backup relationship; and beacon antennas provided at the two ends of the train and used for receiving the beacon information for train positioning.

3. The train positioning method based on a dynamic map according to claim 2, wherein the performing train positioning initialization based on a positioning source in step S1 can be obtained by the following manners:
manner 1, performing positioning by means of the VOBC at a backup end of the train, and performing positioning initialization by means of the train position synchronized by the VOBC at the backup end;
manner 2, performing positioning by means of a dormant wake-up beacon, and when the train stops in a dormant wake-up region and the beacon antennas read dormant wake-up beacon information sent by the matched dormant wake-up beacon, performing positioning initialization on a position of the beacon antenna at an activation end by means of position information of the dormant wake-up beacon in the standard track map; and
manner 3, performing positioning by means of track beacons read by the train in a movement process, and after the beacon antennas on the train read track beacon information sent by two continuous track beacons, performing positioning initialization on the position of the beacon antenna at the activation end by means of two track beacon positions and a correlation therebetween;
according to an actual state of the train, performing positioning on the train by selecting any of the train positioning manners in manners 1 to 3, and obtaining the key point information for creating the dynamic map.

4. The train positioning method based on a dynamic map according to claim 3, wherein the key point information of the dynamic map comprises a Block ID, coordinates and direction where a train tail or the beacon antenna is located.

5. The train positioning method based on a dynamic map according to claim 4, wherein determining a coordinate origin of the dynamic map comprises the following cases:
case 1, if the key point information is the Block ID, coordinates and direction where the train tail is located, setting the coordinate origin of the dynamic map according to the Block direction where the train tail is located; and
case 2, if the key point information is the Block ID, coordinates and direction where the beacon antenna is located, calculating the coordinates of the train tail according to the coordinates of the beacon antenna and a distance from the train tail to the beacon antenna in the train parameters, and then setting the coordinate origin of the dynamic map according to the Block direction where the train tail is located.

6. The train positioning method based on a dynamic map according to claim 5, wherein the generating key point coordinates according to the key point information, and creating the dynamic map in step S2 specifically comprises the following steps:
step S201, acquiring the key point information according to step S 1, and determining the coordinate origin of the dynamic map;
step S202, based on a link relationship of various Blocks in the standard track map, respectively performing searching in a positive direction and negative direction of the dynamic map based on the coordinate origin of the dynamic map determined in step S201, and storing searched relevant information of each Block to obtain a complete Block list for forming the dynamic map; and
step S203, converting the coordinates of the train tail to the dynamic map, and calculating coordinates of a train head and the beacon antennas on the dynamic map according to a train length and the distance from the train tail to the beacon antenna.

7. The train positioning method based on a dynamic map according to claim 6, wherein the positive direction of the dynamic map is a direction from the train tail to the train head; when the direction of the Block where the train tail is located is Up, the coordinate origin of the dynamic map is a starting point of the Block where the train tail is located; when the direction of the Block where the train tail is located is Down, the coordinate origin of the dynamic map is an end point of the Block where the train tail is located.

8. The train positioning method based on a dynamic map according to claim 7, wherein the relevant information of each Block in step S202 comprises a Block ID, direction and length in each track section; and according to the length of each Block, a distance from one end of the Block closer to the origin of the dynamic map to the origin of the dynamic map is calculated, wherein a distance from an endpoint of the Block to the origin of the dynamic map in the positive direction of the dynamic map is a positive value, and a distance from the endpoint of the Block to the origin of the dynamic map in the negative direction of the dynamic map is a negative value.

9. The train positioning method based on dynamic map according to claim 6, wherein if an uncontrolled switch, track boundary, or search capacity is searched in a searching process in step S202, then the searching is stopped.

10. The train positioning method based on a dynamic map according to claim 6, wherein the converting the coordinates of the train tail to the dynamic map in step S203 specifically comprises: determining whether the direction of the train tail obtained in step S1 is consistent with the direction of the Block where the train tail is located; if the directions are consistent, the coordinates of the train tail on the dynamic map are the same as the coordinates of the train tail obtained in step S1; if the directions are inconsistent, the coordinates of the train tail on the dynamic map are determined by subtracting the coordinates of the train tail from the length of the Block where the train tail is located

11. The train positioning method based on a dynamic map according to claim 1, wherein the updating a train position on the dynamic map according to train displacement or beacon information in step S3 specifically comprises:
if the beacon antennas on the train do not read repositioning icon information sent by a repositioning icon, calculating current positions of a train head, a train tail and the beacon antennas according to the train displacement at a current moment and a train position at a previous moment; and
if the beacon antennas on the train read the repositioning icon information sent by the repositioning icon, converting a position of the repositioning icon in the standard track map to the dynamic map, and updating the key point information of the beacon antennas on the train according to the coordinates of the repositioning icon on the dynamic map.

12. The train positioning method based on a dynamic map according to claim 1, wherein step S4 is performed when any of update conditions for the dynamic map is satisfied, and the update conditions specifically comprise the following update conditions:
condition 1, if there is a change in an activation end of the current train, converting the position of the train tail on the current dynamic map to the standard track map, repeating step S2 to determine a coordinate origin of a new dynamic map, performing searching in a positive direction and negative direction by using the coordinate origin of the new dynamic map, acquiring a new Block list, and creating the new dynamic map;
condition 2, if there is a change in the current switch state, converting the position of the train tail on the current dynamic map to the standard track map, repeating step S2 to determine a coordinate origin of a new dynamic map, performing searching in a positive and negative direction by using the coordinate origin of the new dynamic map, acquiring a new Block list, and creating the new dynamic map; and
condition 3, if the number of Blocks through which the movement of the train tail passes after the last dynamic map update exceeds the preset number of Blocks, taking an endpoint of a Block where the train tail is located that is close to an origin of an old dynamic map as an origin of a new dynamic map, updating distance information from an end of each Block in the original list of Blocks close to the origin of the new dynamic map to the origin of the new dynamic map according to a distance between the new origin and the old origin, and deleting a Block whose searching capacity exceeds a searching capacity in a negative direction of the dynamic map.

13. The train positioning method based on a dynamic map according to claim 12, wherein the searching capacity in the positive direction of the origin of the dynamic map is larger than the searching capacity in the negative direction, and the searching capacity in the negative direction is not larger than 10.

14. The train positioning method based on a dynamic map according to claim 6, wherein the converting the train position on the dynamic map to the standard track map in step S5 comprises the following steps:
step S501, determining whether the coordinates of the train position on the dynamic map are in the positive direction of the origin of the dynamic map; if the coordinates are in the positive direction, performing searching from the origin of the dynamic map to the positive direction; if the coordinates are not in the positive direction, performing searching from the origin of the dynamic image to the negative direction;
step S502, comparing the train position with the coordinates of each Block in the Block list in the dynamic map, and determining a Block ID where the train position is located; and
step S503, calculating the coordinates of the train position in the Block.

15. The train positioning method based on a dynamic map according to claim 14, wherein the calculating the coordinates of the train position in the Block in step S503 specifically comprises:
if the direction of the Block is Up, the train direction is the same as the direction of the Block, and the coordinates of the train position on the Block are determined by subtracting the coordinates of the Block from the coordinates of the train position; and
if the direction of the Block is Down, the train direction is the same as the direction of the Block, and the coordinates of the train position on the Block are determined by subtracting the coordinates of the train position from the coordinates of the Block.

16. The train positioning method based on a dynamic map according to claim 15, wherein the train position is converted to the standard track map by performing steps S501-S503, the converted train position is represented as (Block ID, coordinates of the train position on the Block, and train direction) on the standard track map.
